# EUROPÄISCHE PATENTSCHRIFT

(11) **EP 2 905 391 B1**
(45) Veröffentlichungstag und Bekanntmachung des Hinweises auf die Patenterteilung: **07.06.2023**
(21) Anmeldenummer: 15000114.7
(22) Anmeldetag: 16.01.2015
(51) Int. Cl.: E04B 1/76

(54) **Kombination eines Dübels und eines Setzwerkzeugs bzw. Verfahren zur Befestigung von Dämmstoffen**
Combination of a dowel and setting tool, respectively method for fixing insulating materials
Combinaison d'une cheville et d'un outil de pose, respectivement procédé de fixation d'isolants

(30) Priorität: 06.02.2014 DE 102014101493
(43) Veröffentlichungstag der Anmeldung: 12.08.2015
(73) Patentinhaber: fischerwerke GmbH & Co. KG, 72178 Waldachtal (DE)
(72) Erfinder: RENZ, Jürgen, 72202 Nagold (DE)

(56) Entgegenhaltungen:
- EP-A2- 0 921 251
- EP-A2- 1 318 250
- EP-A2- 2 042 666

## Beschreibung

Die Erfindung betrifft eine Kombination eines Dübels und eines Setzwerkzeugs mit den Merkmalen des Oberbegriffs des Anspruchs 1 und ein Setzverfahren zur Befestigung von Dämmstoffen mit den Merkmalen des Oberbegriffs des Anspruchs 4.

Aus der Druckschrift EP 1 318 250 A2 sind eine Kombination eines Dübels und eines Setzwerkzeugs und ein Setzverfahren bekannt, die eine sogenannte "versenkte" Befestigung eines Dämmstoffs an einem Untergrund erlauben. Die Druckschrift schlägt dazu in einer Ausführungsform (Figuren 1 bis 3) vor, einen Dübel mit einem Halteteller vorzusehen, bei dem der Halteteller drehbar gegenüber einer Dübelhülse ist. Nach dem Einstecken des Dübels in ein vorgebohrtes Loch wird in einem ersten Schritt zunächst die Schraube und dann in einem zweiten Schritt Schraube und Halteteller gemeinsam gedreht. Durch die Drehung des Haltetellers schneidet sich dieser in den Dämmstoff ein. Die Schraube zieht im Weiteren den Halteteller in den Dämmstoff ein, wobei dieser komprimiert wird. Der Halteteller ist axialverschieblich und drehbar an der Dübelhülse angebracht, so dass sich Halteteller und Dübelhülse beim Setzen teleskopartig ineinander schieben. Problematisch ist der Übergang vom ersten zum zweiten Schritt. Die Druckschrift schlägt ein Setzwerkzeug vor mit einem Torx-Bit zum Antreiben der Schraube und einem Außensechskant zum Antreiben des Haltetellers. Es bleibt unklar, wie das Eingreifen des Außensechskants in den Halteteller erfolgen soll, da hierzu eine Relativbewegung in axialer Richtung zwischen Setzwerkzeug und Halteteller erfolgen muss. Denkbar wäre es, den Halteteller zunächst per Hand etwas in den elastischen Dämmstoff zu drücken, die Schraube dann soweit einzudrehen, bis das Setzwerkzeug kurz vor dem Halteteller steht, um schließlich den Halteteller zu entlasten. Dabei bewegt er sich aufgrund der Elastizität des Dämmstoffs axial zurück in Richtung des Setzwerkzeugs und kann von dessen Sechskant gefasst werden. Dies ist jedoch aufwendig und eine zuverlässige Funktion bei unterschiedlichen Dämmstoffen nicht gewährleistet.

Aufgabe der Erfindung ist es daher, das Setzvertahren und die Kombination des Dübels und des Setzwerkzeugs derart zu verbessern, dass ein zuverlässiges, schnelles Setzen erreicht wird.

Diese Aufgabe wird erfindungsgemäß durch die Merkmale der Ansprüche 1 und 4 gelöst.

Der Dübel der erfindungsgemäßen Kombination zur Befestigung von Dämmstoffen, insbesondere plattenförmigen Dämmstoffen, weist eine Schraube als Spreizelement auf. Als Schraube wird hier auch ein Schraubnagel verstanden. Weiterhin weist der Dübel eine Dübelhülse und einen gegenüber der Dübelhülse drehbaren Halteteller auf. "Drehbar" meint, dass der Halteteller um eine Drehachse, die im Wesentlichen der Längsachse der Dübelhülse entspricht, relativ zur Dübelhülse drehbar ist. Halteteller und Dübelhülse bilden ein Drehlager. Dieses Drehlager muss nicht leichtgängig sein, auch kann ein Anfangswiderstand zu überwinden sein. Die Drehung der Schraube und des Haltetellers erfolgt mit einem Setzwerkzeug. Es ist dazu derart gestaltet, dass es sowohl mit der Schraube als auch mit dem Halteteller formschlüssig in Eingriff gebracht werden kann. Dabei wird in einem ersten Schritt nur die Schraube und dann in einem zweiten Schritt Schraube und Halteteller gemeinsam gedreht. Das erfindungsgemäße Setzverfahren zeichnet sich dadurch aus, dass beim Übergang vom ersten zum zweiten Schritt das Setzwerkzeug und der Halteteller mittels einer schraublinienförmigen Relativbewegung miteinander in formschlüssigen Eingriff gebracht werden, wozu das Setzwerkzeug und der Halteteller entsprechend gestaltet sind. Mit einer "schraublinienförmigen Relativbewegung" ist eine kombinierte Translations- und Rotationsbewegung gemeint, wobei insbesondere die Rotation um die Längsachse des Setzwerkzeugs erfolgt. Eine derartige Bewegung erlaubt, dass der Übergang vom ersten zum zweiten Schritt bei kontinuierlicher Drehung des Setzwerkzeugs erfolgt, und zwar insbesondere bei im Wesentlichen gleichbleibender Drehgeschwindigkeit. Der Benutzer kann also das Werkzeug einfach weiter drehen lassen, ohne irgendwie zusätzlich eingreifen oder steuern zu müssen. Er wird allenfalls ein erhötes Drehmoment durch das Drehen des Haltetellers und die Komprimierug des Dämmstoffs spüren.

Vorzugsweise weist das Setzwerkzeug einen Vorsprung auf, der formschlüssig in eine Ausnehmung des Haltetellers eingreift, wobei der Vorsprung sich insbesondere in Längsrichtung, also parallel zur Drehachse des Setzwerkzeugs erstreckt. Alternativ kann der formschlüssig Eingriff umgekehrt erfolgen, also mit einem Vorsprung am Halteteller und einer Ausnehmung am Setzwerkzeug. Ohne den Erfindungsgedanken zu verlassen, können auch sowohl der Halteteller als auch das Setzwerkzeug Vorsprünge aufweisen, die miteinander in formschlüssigen Eingriff gebracht werden. Bevorzugt ist allerdings ein Vorsprung am Setzwerkzeug und eine Ausnehmung am Halteteller, da Vorsprünge am Halteteller das spätere Abdecken des Haltetellers stören können.

Um einen einfachen, zuverlässig funktionierenden Aufbau von Setzwerkzeug und Dübel zu gewährleisten, schlägt die Erfindung vor, dass das Setzwerkzeug mindestens einen, vorzugsweise mehrere, längliche, insbesondere zylindrische, Zapfen als Vorsprünge und der Halteteller mindestens die gleiche Anzahl in Umfangsrichtung verlaufender Nuten als Ausnehmung aufweist. Die Nuten erlauben ein "Eintauchen" der Zapfen entlang einer Schraubenlinie, so dass der Zapfen weit genug in die Nut in Einbringrichtung des Dübels eingedrungen ist, bis der Zapfen an einem Ende der Nut anschlägt, also formschlüssig eingreift. Gleichzeitig erlaubt eine Nut eine Führung und damit Stabilisierung des Haltetellers in radialer Richtung durch den Zapfen.

Die Erfindung wird nachfolgend anhand eines Ausführungsbeispiels erläutert.

Es zeigen:
- Figur 1: einen erfindungsgemäßen Dübel in einer perspektivischen Schnittdarstellung;
- Figuren 2a - 2c: das erfindungsgemäße Setzverfahren für diesen Dübel in drei Schnittdarstellungen; und
- Figur 3: eine Detail-Schnittdarstellung, die den Eingriff des Setzwerkzeugs in den Halteteller des erfindungsgemäßen Dübels zeigt.

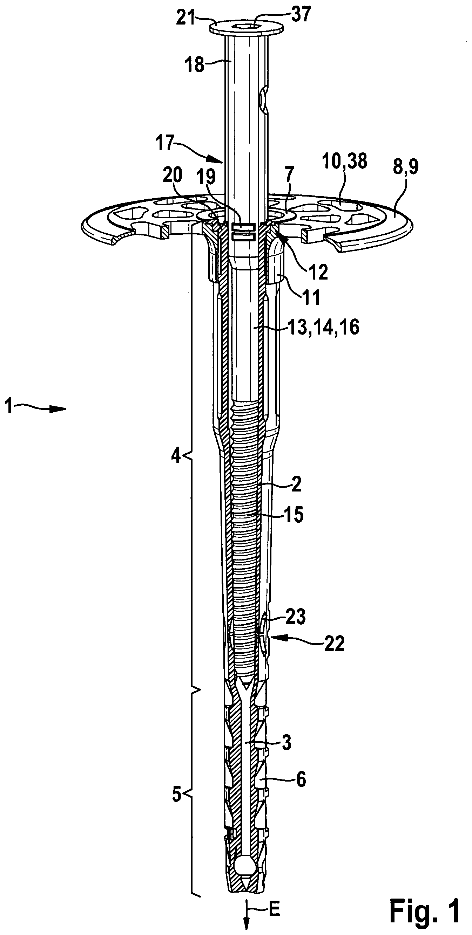

Der in Figur 1 dargestellte Dübel 1 weist eine lang gestreckte Dübelhülse 2 mit einem sich entlang der Längsachse erstreckenden Kanal 3 auf. Vorne weist die Dübelhülse 2 einen Spreizabschnitt 4 auf, an den sich ein Schaftabschnitt 5 anschließt. "Vorne" und "hinten" beziehen sich stets auf die Einbringrichtung E des Dübels beim Setzen. Der Übergang vom Schaftabschnitt 5 zum Spreizabschnitt 4 ist durch eine signifikante Verengung des Kanals 3 auf etwa die Hälfte des Durchmessers gekennzeichnet, während der Außendurchmesser im Wesentlichen nur sehr leicht konisch nach hinten erweitert. Im hinteren Viertel ist der Schaftabschnitt 4 nochmals um etwa 20 Prozent im Außendurchmesser erweitert. Der Spreizabschnitt 5 weist Kerben 6 derart auf, dass die Außenseite des Spreizabschnitts 5 eine widerhakenartige Struktur aufweist. Am hinteren Ende der Dübelhülse 2 erweitert sich der Schaftabschnitt 4 zu einem ersten Kragen 7 und es ist ein Halteteller 8 in diesem Bereich angeordnet. Der Halteteller 8 ist im Wesentlichen eine flache, kreisrunde Scheibe 9 mit mehreren, über den Umfang verteilten Ausnehmungen 10, sowie einen nach vorne ragenden, kurzen hülsenartigen Fortsatz 11 zur drehbaren Lagerung des Haltetellers 8 auf der Dübelhülse 2. Gegen eine Verschiebung nach hinten wird der Halteteller 8 vom ersten Kragen 7 gehalten, während er gegenüber einer Verschiebung nach vorne, die für das Setzen und den Einbauzustand nicht relevant ist, lediglich durch eine Rastverbindung 12 in Form einer umlaufenden Nut und eines umlaufenden Wulsts (nicht dargestellt) gehalten wird. Durch den Halt gegen Verschieben nach hinten ist der Halteteller 8 axialfest mit der Dübelhülse 2 im Sinne der Erfindung verbunden. Die Ausgestaltung der Verbindung als Rastverbindung 12 erlaubt, dass der Halteteller 8 gesondert von der Dübelhülse 2 bis zu einer Baustelle transportiert, dann erst vom Bediener von vorne her auf die Dübelhülse 2 geschoben und in der dargestellten Position verrastet wird. Hierdurch kann der Dübel 1 sehr platzsparend transportiert werden. Ganz unabhängig von den sonstigen Merkmalen des Ausführungsbeispiels kann die Rastverbindung 12 lösbar oder unlösbar gestaltet sein oder durch eine andere Art der Verbindung ersetzt sein.

Axial mittig liegt in der Dübelhülse 2 eine Schraube 13 als Spreizelement ein, wobei Figur 1 den Zustand vor dem Setzen darstellt, bei dem das hintere Ende der Schraube 13 aus der Dübelhülse 2 herausschaut. Ohne die Schraube 13 ist der Dübel 1 so lang wie die Dübelhülse 2. Das vordere Ende der Schraube 13 wird von einem Metallstift 14 gebildet, der ein Gewinde 15 aufweist, dessen Länge etwa dem 1,5-fachen der Länge des Spreizabschnitts 5 der Dübelhülse 2 entspricht. Das Verhältnis der Gewindesteigung zum Gewindeaußendurchmesser liegt über den wesentlichen Teil der Länge bei 0,25, es handelt sich also um eine Schraube 13 geringer Steigung. An das Gewinde 15 schließt sich zunächst ein gewindeloser Abschnitt 16 und dann ein Kopfabschnitt 17 mit Rändel (nicht dargestellt) an. Der Kopfabschnitt 17 ist umspritzt mit Kunststoff, wodurch ein langgestreckter, im Wesentlichen zylindrischer Kopf 18 der Schraube 13 gebildet ist. Die Länge des Kopfes 18 entspricht im Wesentlichen der Länge des Spreizabschnitts 5. Im vorderen Bereich weist der Kopf 18 mehrere umlaufende erste Wülste 19 auf, die in Verbindung mit einem radial nach innen stehenden, umlaufenden zweiten Wulst 20 am hinteren Ende der Dübelhülse 2 dafür sorgen, dass die Schraube 13 in der dargestellten Position gegenüber der Dübelhülse 2 für das Setzen gehalten wird. Am hinteren Ende weist die Schraube 13 einen zweiten Kragen 21 auf, der beim Eintreiben der Schraube 13 in die Dübelhülse 2 im Bereich des ersten Kragens 7 der Dübelhülse 2 axial zum Anschlag kommt. Bei diesem Eintreiben gelangt die Schraube 13 mit ihrem Gewinde 15 in den Spreizabschnitt 5 der Dübelhülse 2. Damit sie dort greifen und zu einer Verspreizung führen kann, ist der Kanal 3 gegenüber dem Schaftabschnitt 4 deutlich verengt. Wie im Weiteren noch näher erläutert wird, ist der Eintreibvorgang der Schraube 13 in die Dübelhülse 2 nicht mit dem axialen Anschlagen des zweiten Kragens 21 an der Dübelhülse 2 beendet, sondern es soll eine Verkürzung der Dübelhülse 2 erfolgen. Hierzu weist die Dübelhülse 2 im vorderen, unmittelbar an den Spreizabschnitt 4 anschließenden Teil des Schaftabschnitts 5 eine Verkürzungszone 22 auf. Diese Verkürzungszone 22 wird durch mehrere lokale Schwächungen 23 gebildet, die die Dübelhülse 2 teilweise vollständig durchdringen, teilweise aber auch nur taschenartig ausgebildet sind. Dabei kommt es nicht darauf an, ob das Durchdringen teilweise oder vollständig erfolgt. Wichtig ist, dass die Dübelhülse 2 beim Transport und beim Einführen in ein Bohrloch in diesem Bereich nicht wesentlich deformiert wird, aber beim Eintreiben der Schraube 13 mittels eines möglichst geringen Drehmoments verkürzbar ist, wobei die Verkürzung im Ausführungsbeispiel durch eine plastische Stauchung erfolgt.

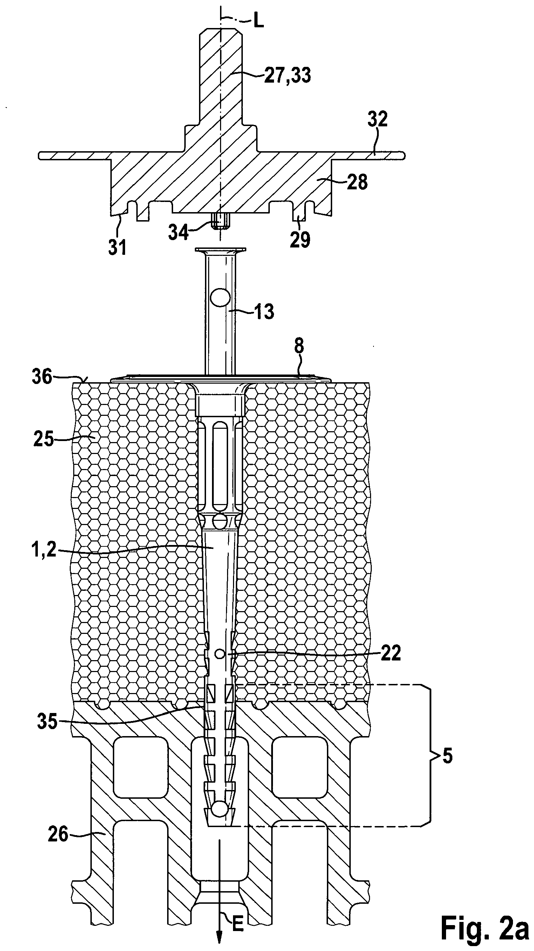

Anhand der Figuren 2a - 2c wird im Folgenden das erfindungsgemäße Setzverfahren erläutert. Dieses Setzverfahren dient der Erstellung einer Befestigungsanordnung 24 mit einem plattenförmigen Dämmstoff 25, der mittels des Dübels 1 an einem Untergrund 26, hier ein Mauerwerk aus Hochlochziegeln, befestigt ist. Das Setzen erfolgt mittels eines Setzwerkzeugs 27, das beispielsweise in eine Bohrmaschine oder einen Akkuschrauber (nicht dargestellt) eingespannt werden kann.

Das Setzwerkzeug 27 weist einen zylindrischen Grundkörper 28 auf, von dem an einer dem Dübel 1 zugewandten, vorderen Seite mehrere axial nach vorne ragende, längliche zylindrische Zapfen 29 als Vorsprünge 30 angeordnet sind. Insgesamt sind sieben Zapfen 29 über den Umfang verteilt auf einer gedachten Kreislinie angeordnet. Außerdem ragt vom Grundkörper 28 entlang des Umfangs ein umlaufender Rand 31 nach vorne, wobei der Rand 31 nicht ganz so weit nach vorne ragt wie die Zapfen 29. An der gegenüberliegenden, hinteren Seite des Grundkörpers 28 wird dieser von einem Anschlagsteller 32 in radialer Richtung überragt. In axialer Richtung schließt sich mittig an den Grundkörper 28 nach hinten ein sechskantiger Schaft 33 zur Aufnahme des Setzwerkzeugs 27 in einer Bohrmaschine oder dgl. an. Mittig nach vorne überragt den Grundkörper 28 in axialer Richtung außerdem ein sternförmiges Schraubbit 34.

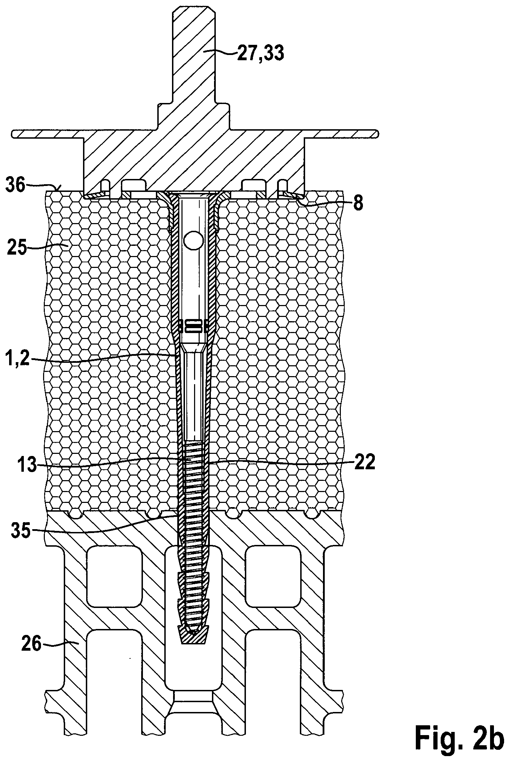

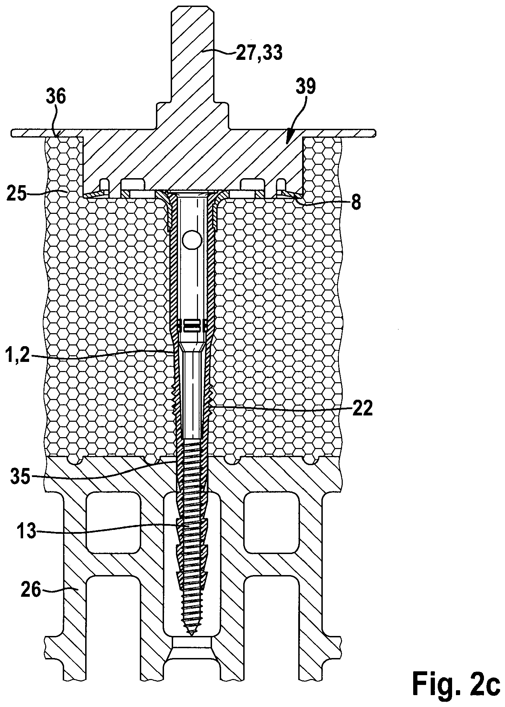

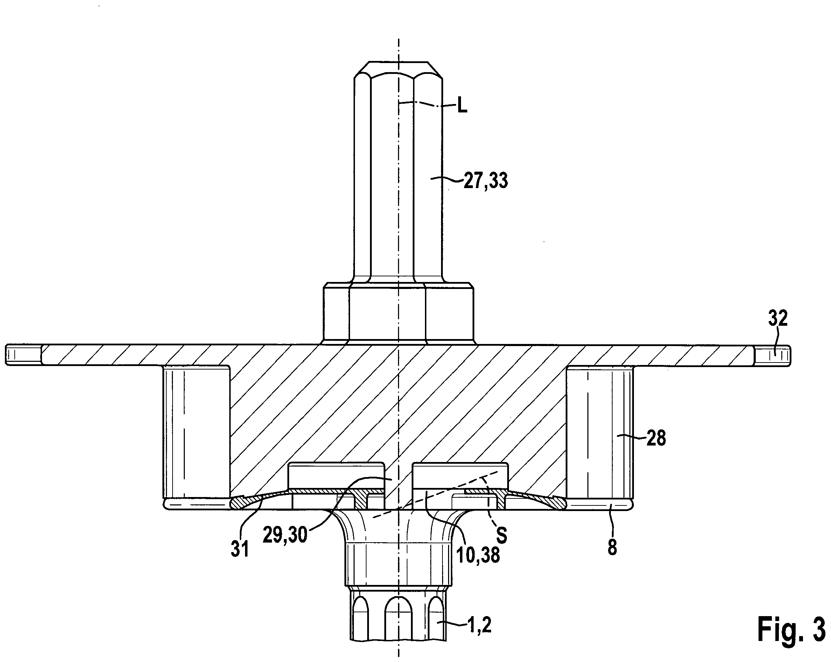

Zur Erstellung der Befestigungsanordnung 24 wird zunächst ein Bohrloch 35 durch den Dämmstoff 25 hindurch in den Untergrund 26 erstellt. In das Bohrloch 35 wird der Dübel 1 gesteckt, bis der Halteteller 8 an einer Außenseite 36 des Dämmstoffs 25 zur Anlage kommt. Der Spreizabschnitt 5 des Dübels 1 ist dabei im Bereich des Untergrunds 26 angeordnet. Vor oder nach dem Einstecken des Dübels 1 wird das Setzwerkzeug 27 mit dem Schraubbit 34 auf die Schraube 13 aufgesteckt, wozu diese eine sternförmige Werkzeugaufnahme 37 an ihrem hinteren Ende aufweist (siehe Figur 1). Durch Drehung des Setzwerkzeugs 27 wird die Schraube 13 in die Dübelhülse 2 eingetrieben und verspreizt den Spreizabschnitt 5, wodurch der Dübel 1 Halt im Untergrund 26 erhält. Das Eintreiben erfolgt in einem ersten Schritt bis zu dem in Figur 2b dargestellten Zustand, es wird also nur die Schraube 13 gedreht. Bei dem in Figur 2b dargestellten Übergang zum zweiten Schritt setzt einerseits der zweite Kragen 21 der Schraube 13 auf der Dübelhülse 2 auf, und es greifen andererseits die Zapfen 29 formschlüssig in die Ausnehmungen 10 des Haltetellers 8 ein. Beides muss nicht zwingend genau gleichzeitig erfolgen, sondern kann auch in einer längeren Übergangszeit nacheinander geschehen. Auch braucht die Drehbewegung nicht gestoppt werden, sondern der Bediener kann das Setzwerkzeug 27 kontinuierlich bis zum Abschluss des Setzvorgangs (Figur 2c) weiter drehen lassen. Das formschlüssige Eingreifen ist in Figur 3 im Detail dargestellt, da hier ein Schnitt durch einen der Zapfen 29 und die korrespondierende Ausnehmung 10 gezeigt ist. Die Ausnehmung 10 ist als eine in Umfangsrichtung verlaufende Nut 38 (siehe Figuren 1 und 3) ausgebildet, die den Halteteller 8 axial durchsetzt. Da der Zapfen 29 zylindrisch ist, hat er innerhalb der Nut 38 Spiel in Umfangsrichtung. Dies ermöglicht, dass der Zapfen 29 entlang einer schraubenlinienförmigen Relativbewegung in die Nut 38 eingreifen kann, also insbesondere durch die beim Einschrauben der Schraube 13 bestehende Kombination aus translatorischer Bewegung in Achsrichtung und Rotation um die Längsachse L des Setzwerkzeugs 27. Die Relativbewegung ist durch die Schraubenlinie S angedeutet dargestellt. Beim Übergang vom ersten zum zweiten Schritt kann es vorkommen, dass der Zapfen 29 nicht exakt der Schraubenlinie S folgt, sondern beispielsweise zunächst zwischen zwei Nuten 38 aufsetzt. Dies führt jedoch lediglich dazu, dass der Zapfen 29 zunächst auf dem Halteteller 8 entlang gleitet und ihn dabei etwas in den Dämmstoff 25 drückt, um dann in die in Drehrichtung nächste Nut 38 einzugreifen. Auch bei relativ hoher Drehzahl kann es dabei durch die Länge der Nut 38 jedoch nicht dazu kommen, dass diese Nut 38 übersprungen wird. Somit gewährleistet die Kombination aus zylindrischem Zapfen 29 und in Umfangsrichtung verlaufender Nut 38 ein besonders zuverlässiges formschlüssiges Eingreifen mittels einer schraublinienförmigen Relativbewegung.

Durch weiteres Drehen des Setzwerkzeugs 27 wird im zweiten Schritt des Setzverfahrens sowohl die Schraube 13 als auch der Halteteller 8 gedreht. Da der zweite Kragen 21 der Schraube 13 wie beschrieben auf der Dübelhülse 2 aufliegt, erzeugt die weitere Drehbewegung axiale Schubkräfte innerhalb der Dübelhülse 2, die zum plastischen Stauchen der Verkürzungszone 22 führen. Durch den axialen Halt des Haltetellers 8 an der Dübelhülse 2 wird der Halteteller 8 drehend in den Dämmstoff 25 gezogen, wobei er gleichzeitig an seinem äußeren Umfang axial durch den Rand 31 gestützt wird. Der Halteteller 8 wird soweit in den Dämmstoff 25 versenkt, bis der Anschlagsteller 32 des Setzwerkzeugs 27 auf der Außenseite 36 des Dämmstoffs 25 aufsitzt, wie dies in Figur 2c dargestellt ist. Abschließend wird das Setzwerkzeug 27 abgenommen und die im Dämmstoff 25 entstandene Vertiefung 39 kann mit einer Dämmstoffrondelle (nicht dargestellt) geschlossen werden.

Das beschriebene Setzverfahren mit dem Dübel 1 und dem Setzwerkzeug 27 ermöglicht einerseits eine platzsparende Verpackung des Dübels 1 und andererseits ein zuverlässiges, schnelles Setzen.

### Bezugszeichenliste

- 1: Dübel
- 2: Dübelhülse
- 3: Kanal
- 4: Schaftabschnitt
- 5: Spreizabschnitt
- 6: Kerbe
- 7: erster Kragen an der Dübelhülse 2
- 8: Halteteller
- 9: Scheibe
- 10: Ausnehmung des Haltetellers 8
- 11: Fortsatz
- 12: Rastverbindung
- 13: Schraube
- 14: Metallstift
- 15: Gewinde
- 16: gewindeloser Abschnitt der Schraube 13
- 17: Kopfabschnitt des Metallstifts 14
- 18: Kopf der Schraube 13
- 19: erster Wulst an der Schraube 13
- 20: zweiter Wulst an der Dübelhülse 2
- 21: zweiter Kragen an der Schraube 13
- 22: Verkürzungszone
- 23: Schwächung
- 24: Befestigungsanordnung
- 25: Dämmstoff
- 26: Untergrund
- 27: Setzwerkzeug
- 28: Grundkörper
- 29: Zapfen
- 30: Vorsprung
- 31: Rand
- 32: Anschlagsteller
- 33: Schaft
- 34: Schraubbit
- 35: Bohrloch
- 36: Außenseite des Dämmstoffs 25
- 37: Werkzeugaufnahme der Schraube 13
- 38: Nut
- 39: Vertiefung im Dämmstoff 25
- E: Einbringrichtung
- L: Längsachse des Setzwerkezeugs
- S: Schraubenlinie

## Patentansprüche

1. Kombination eines Dübels (1) und eines Setzwerkzeugs (27) zur Befestigung von Dämmstoffen (25),
- wobei der Dübel (1) eine Schraube (13) als Spreizelement, eine Dübelhülse (2) und einen gegenüber der Dübelhülse (2) drehbaren Halteteller (8) aufweist,
- und wobei das Setzwerkzeug (27) und der Dübel (1) derart gestaltet sind, dass das Setzwerkzeug (27) formschlüssig mit der Schraube (13) und mit dem Halteteller (8) in Eingriff gebracht werden kann,
**dadurch gekennzeichnet, dass** das Setzwerkzeug (27) und der Halteteller (8) derart gestaltet sind, dass das Setzwerkzeug (27) und der Halteteller (8) mittels einer schraublinienförmigen Relativbewegung bei kontinuierlicher Drehung des Setzwerkzeugs (27) miteinander in formschlüssigen Eingriff bringbar sind.

2. Kombination nach Anspruch 1, **dadurch gekennzeichnet, dass** das Setzwerkzeug (27) mindestens einen Vorsprung (30) aufweist, der formschlüssig in eine Ausnehmung (10) des Haltetellers (8) eingreift, oder dass der Halteteller (8) mindestens einen Vorsprung aufweist, der formschlüssig in eine Ausnehmung oder in einen Vorsprung des Setzwerkzeugs (27) eingreift.

3. Kombination nach Anspruch 1, **dadurch gekennzeichnet, dass** das Setzwerkzeug (27) einen länglichen, insbesondere zylindrischen, Zapfen (29) als Vorsprung (30) und der Halteteller (8) eine in Umfangsrichtung verlaufende Nut (38) als Ausnehmung (10) aufweist.

4. Setzverfahren zum Befestigen eines Dämmstoffs (25) an einem Untergrund (26), mit einem Dübel (1) und einem Setzwerkzeug (27), insbesondere nach einem der vorstehenden Ansprüche,
- wobei der Dübel (1) eine Schraube (13) als Spreizelement, eine Dübelhülse (2) und einem Halteteller (8) aufweist,
- wobei die Schraube (13) vom Setzwerkzeug (27) drehend in die Dübelhülse (2) eingetrieben wird, und
- wobei dabei in einem ersten Schritt nur die Schraube (13) und dann in einem zweiten Schritt Schraube (13) und Halteteller (8) gemeinsam gedreht werden,
**dadurch gekennzeichnet, dass** beim Übergang vom ersten zum zweiten Schritt das Setzwerkzeug (27) und der Halteteller (8) mittels einer schraublinienförmigen Relativbewegung miteinander in formschlüssigen Eingriff gebracht werden, derart, dass der Übergang vom ersten zum zweiten Schritt bei kontinuierlicher Drehung des Setzwerkzeugs (27) erfolgt.

5. Setzverfahren nach Anspruch 4, **dadurch gekennzeichnet, dass** der Übergang bei im Wesentlichen gleichbleibender Drehgeschwindigkeit erfolgt.

## Claims

1. Combination of a fixing plug (1) and a setting tool (27) for fixing insulating materials (25),
- wherein the fixing plug (1) has a screw (13) as expander element, a fixing plug sleeve (2) and a holding plate (8) which is rotatable relative to the fixing plug sleeve (2),
- and wherein the setting tool (27) and the fixing plug (1) are configured in such a way that the setting tool (27) can be brought into interlocking engagement with the screw (13) and with the holding plate (8),
**characterised in that** the setting tool (27) and the holding plate (8) are configured in such a way that the setting tool (27) and the holding plate (8) can be brought into interlocking engagement with one another by means of a helical relative movement with continuous rotation of the setting tool (27).

2. Combination according to claim 1, **characterised in that** the setting tool (27) has at least one projection (30) which engages interlockingly in an aperture (10) of the holding plate (8); or the holding plate (8) has at least one projection which engages interlockingly in an aperture or in a projection of the setting tool (27).

3. Combination according to claim 1, **characterised in that** the setting tool (27) has an elongate, especially cylindrical, peg (29) as projection (30) and the holding plate (8) has a slot (38) running in the circumferential direction as aperture (10).

4. Setting method for fixing an insulating material (25) to a substrate (26), having a fixing plug (1) and a setting tool (27), especially according to any one of the preceding claims,
- wherein the fixing plug (1) has a screw (13) as expander element, a fixing plug sleeve (2) and a holding plate (8),
- wherein the screw (13) is driven rotationally into the fixing plug sleeve (2) by the setting tool (27), and
- wherein in a first step only the screw (13) is rotated and then, in a second step, the screw (13) and the holding plate (8) are rotated together,
**characterised in that** during the transition from the first step to the second step, the setting tool (27) and the holding plate (8) are brought into interlocking engagement with one another by means of a helical relative movement in such a way that the transition from the first step to the second step takes place with continuous rotation of the setting tool (27).

5. Setting method according to claim 4, **characterised in that** the transition takes place at a substantially constant rotational speed.

## Revendications

1. Combinaison d'une cheville (1) et d'un outil de pose (27) pour la fixation de matériaux isolants (25),
- la cheville (1) présentant une vis (13) en tant qu'élément d'expansion, une gaine de cheville (2) et un plateau de maintien (8) pouvant tourner par rapport à la gaine de cheville (2),
- et l'outil de pose (27) et la cheville (1) étant conçus de telle sorte que l'outil de pose (27) puisse être mis en prise par complémentarité de formes avec la vis (13) et avec le plateau de maintien (8),
**caractérisée en ce que** l'outil de pose (27) et le plateau de maintien (8) sont conçus de manière à ce que l'outil de pose (27) et le plateau de maintien (8) puissent être mis en prise l'un avec l'autre par complémentarité de formes au moyen d'un déplacement relatif en forme de ligne hélicoïdale avec une rotation continue de l'outil de pose (27).

2. Combinaison selon la revendication 1, **caractérisée en ce que** l'outil de positionnement (27) présente au moins une saillie (30) qui vient en prise par complémentarité de formes dans un évidement (10) du plateau de maintien (8), ou **en ce que** le plateau de maintien (8) présente au moins une saillie qui vient en prise par complémentarité de formes dans un évidement ou dans une saillie de l'outil de pose (27).

3. Combinaison selon la revendication 1, **caractérisée en ce que** l'outil de pose (27) présente un tourillon (29) allongé, en particulier cylindrique, en tant que saillie (30) et le plateau de maintien (8) présente une rainure (38) s'étendant dans la direction circonférentielle en tant qu'évidement (10).

4. Procédé de pose pour la fixation d'un matériau isolant (25) sur un support (26), avec une cheville (1) et un outil de pose (27), en particulier selon l'une quelconque des revendications précédentes,
- la cheville (1) présentant une vis (13) comme élément d'expansion, une gaine de cheville (2) et un plateau de maintien (8),
- la vis (13) étant enfoncée dans la gaine de cheville (2) par une rotation de l'outil de pose (27), et
- dans une première étape, seule la vis (13), puis dans une seconde étape, la vis (13) et le plateau de maintien (8) sont tournés ensemble,
**caractérisé en ce que** lors de la transition de la première à la seconde étape, l'outil de pose (27) et le plateau de maintien (8) sont mis en prise l'un avec l'autre au moyen d'un déplacement relatif en forme de ligne hélicoïdale, de sorte que la transition de la première à la seconde étape s'effectue avec une rotation continue de l'outil de pose (27).

5. Procédé de pose selon la revendication 4, **caractérisé en ce que** la transition s'effectue à une vitesse de rotation sensiblement constante.
